# EUROPEAN PATENT APPLICATION

(11) **EP 2 754 481 A1**
(43) Date of publication of application: **16.07.2014**
(21) Application number: 13151029.9
(22) Date of filing: 11.01.2013
(51) Int. Cl.: B01D 53/14, B01D 53/62

(54) **Heat integration of a chilled ammonia process**

(71) Applicant: Alstom Technology Ltd, 5400 Baden (CH)
(72) Inventor: Balfe, Michael Charles, DE-55131 Mainz (DE); Kniesburges, Peter, 65197 Wiesbaden (DE)

(57) **Abstract**

The present disclosure relates to a method of operating a chilled ammonia process system (100) comprising the steps of: transferring heat energy of a NH₃ stripper offgas stream (113) from a NH₃ stripper unit (110) to a CO₂ absorption liquid regenerator unit (111) by a NH₃ stripper offgas heat exchanging system (130) comprising a heat exchanging device (116), transferring heat energy of a hot flue gas stream (125) to the CO₂ absorption liquid regenerator unit (111) by a flue gas heat exchanging system (131) comprising a first heat exchanging device (126), thereby obtaining a flue gas stream (127) with reduced heat energy exiting said first heat exchanging device (126), and transferring heat energy of the flue gas stream (127) with reduced heat energy to the NH₃ stripper unit (110), by the flue gas heat exchanging system (131) which further comprises a second heat exchanging device (128). The present disclosure further relates to a chilled ammonia process system as well as to a power plant comprising such a system.

## Description

### Technical field

This disclosure is related to systems and methods for transferring heat energy within ammonia based gas purification systems.

### Background

In the combustion of a fuel, such as coal, oil, peat, waste, etc., in a combustion plant, such as a power plant, a hot process gas is generated, such process gas containing, among other components, carbon dioxide CO₂.

Industrial separation of CO₂ from a flue gas may include liquid ammonia (NH₃) solutions as a solvent. At least a portion of a flue gas generated in a combustion process may be directed to carbon capture process, such as a Chilled Ammonia Process (CAP), for further treatment. The CO₂ present in the flue gas is in the CAP absorbed in the solvent in an absorption process, generally referred to as the CO₂ absorption process. After absorption of the CO₂ from a gas using ammonia based solutions, residual ammonia is often still present in the treated gas. This residual ammonia has to be removed in a separate process step, before the treated gas can be further processed or sent to the atmosphere.

The treated flue gas leaving the CO₂ absorber unit will contain varying amounts of gaseous ammonia. This ammonia in the treated flue gas must be controlled to desired levels, captured, and returned to the CO₂ absorption process in order to minimize ammonia losses from the CO₂ absorption unit and in order to maintain stable operating conditions.

Ammonia is removed from the treated gas in a washing step by scrubbing the flue gas with wash liquid in an adequate contacting device. This process may be generally referred to as the NH₃ absorption process. In general, fresh water, water or weak ammonia solution coming from a NH₃ stripping process is used as the wash liquid. After the wash step, the wash liquid will contain the ammonia absorbed from the treated gas. The wash liquid is then sent to an ammonia stripping unit, where the ammonia is separated from the wash liquid. The stripped wash liquid leaves the stripping unit as a stripper off gas stream containing mainly ammonia, CO₂ and water vapor, but also a usually small fraction of non condensable co-absorbed gas components from the flue gas. The stripper offgas stream is generally either discharged to the atmosphere or introduced into a regenerator unit in which CO₂ is separated and removed from the ammonia based solution, and the ammonia based solution depleted of CO₂ is recycled to the CO₂ absorption.

CO₂ rich ammoniated solution is pumped from the CO₂ absorption unit to the regenerator unit. In the regenerator unit, as heat is applied, CO₂ evolves from the rich solution. The composition of the vapor stream leaving the regenerator unit is a function of temperature, pressure, relative concentrations of CO₂, ammonia, and water in solution.

Amine based technologies utilize a buffer steam system to integrate waste heat over a so called waste heat boiler. The generated stream is in turn condensed in the amine stripping system generating lean amine solution for renewed CO₂ capture. Since the operating temperature window of amine systems is narrow and less than 150°C, any temperature driving force from waste streams above 150°C is destroyed over a waste heat boiler.

In addition the operating window for integration of NH₃ stripper and the regenerator system is currently bound by wanting high R-values for CO₂ capture in the absorber but low R-values to allow waste heat integration into the stripper system. The reaction patterns in the CAP depend on physical parameters and the ratio between the total nitrogen and carbon species concentration which is defined as the R-value.

There is always a need to improve the flexibility of a system and improving the energy efficiency of a power plant. It would be desirable to find new ways to lower overall energy consumption, scale down the size/capacity of the components and better utilize the components present in a power plant.

### Summary

By using heat energy from parts of a process and forward it to other parts where it is needed the overall energy consumption may be lowered.

The present invention is directed to a method and a system for industrial separation of carbon dioxide (CO₂) from flue gas, natural gas, syngas or other gas streams mainly containing nitrogen, oxygen, hydrogen, carbon monoxide or methane, where liquid ammonia (NH₃) solutions are used as a solvent. The CO₂ is absorbed in the solvent in an absorption process. This process may be generally referred to as the CO₂ absorption process. After absorption of the CO₂ from a gas with ammonia based solutions, residual ammonia is often still present in the treated gas. This residual ammonia has to be removed in a separate process step, before the treated gas can be further processed or sent to the atmosphere.

Ammonia is removed from the gas in a wash step by scrubbing the flue gas with a wash liquid in an adequate contacting device. This process may be generally referred to as the NH₃ absorption process or a washing process. In general, fresh water or water or weak ammonia solution coming from a stripping process is used as the wash liquid.

After the wash step, the wash liquid will contain the ammonia absorbed from the gas. The wash liquid is then sent to an ammonia stripping process, where the ammonia is separated from the wash liquid. The stripped wash liquid is generally recycled to the wash step. The ammonia separated from the wash liquid leaves the stripping process as a stripper offgas stream containing mainly ammonia, CO₂ and water vapor, but also a usually small fraction of non condensable co-absorbed gas components from the flue gas.

The stripper offgas stream is generally partially condensed before a portion of the condensed liquid is recycled to the stripper with the rest feeding the absorber system. Since the absorber system is operating at low pressure the stripper system may also operate at low pressure which is good for the stripping of NH₃ but results in a decrease in the quality of heat recovered through partial condensation of the offgas stream. The non condensibles are returned to the absorber system.

Alternatively the stripper offgas stream can be introduced into a regenerator unit in which CO₂ is separated at increased pressure. In this case the stripper is required to operate at increased pressure which imposes several complications with the system water balances and inefficiencies in the stripping process.

An object of the present invention is to provide a method of operating a chilled ammonia process system (100) comprising the steps of:
transferring heat energy of a NH₃ stripper offgas stream (113) from a NH₃ stripper unit (110) to a CO₂ absorption liquid regenerator unit (111) by a NH₃ stripper offgas heat exchanging system (130) comprising a heat exchanging device (116).

According to one embodiment, the method may further comprise transferring heat energy of a hot flue gas stream (125) to the CO₂ absorption liquid regenerator unit (111) by a flue gas heat exchanging system (131) comprising a first heat exchanging device (126), thereby obtaining a flue gas stream (127) with reduced heat energy exiting said first heat exchanging device (126). Optionally, the method may further comprise transferring heat energy of the flue gas stream (127) with reduced heat energy to the NH₃ stripper unit (110), by the flue gas heat exchanging system (131) which further comprises a second heat exchanging device (128).

According to one embodiment, the NH₃ stripper offgas heat exchanging system (130) further comprises a heat pump device (114) arranged before the heat exchanging device (116), wherein said heat pump device (114) acts to increase the pressure of the NH₃ stripper offgas stream (113) and provides an offgas stream (115), which is forwarded to the heat exchanging device (116).

According to one embodiment, the method further comprises the heat exchanging device (116) transferring heat energy to at least part of a feed stream (124) entering the CO₂ absorption liquid regenerator unit (111).

According to one embodiment, the method further comprises the heat exchanging device (116) transferring heat energy to at least a side stream (122) from the CO₂ absorption liquid regenerator unit (111), which is returned to the CO₂ absorption liquid regenerator unit (111) as a heated stream (123).

According to one embodiment, the method further comprises the first heat exchanging device (126) of the flue gas heat exchanging system (131) transferring heat energy to at least a circulating side stream of the CO₂ absorption liquid regenerator unit (111) or at least a sump of the CO₂ absorption liquid regenerator unit (111).

According to one embodiment, the method further comprises the second heat exchanging device (128) of the flue gas heat exchanging system (131) transferring heat energy to at least part of a feed stream (108) entering the NH₃ stripper unit (110), a circulating side stream of the NH₃ stripper unit (110) or at least a sump of the NH₃ stripper unit (110).

An object of the present invention is to provide a method of operating a chilled ammonia process system (100) comprising the steps of:
transferring heat energy of a NH₃ stripper offgas stream (113) from a NH₃ stripper unit (110) to a CO₂ absorption liquid regenerator unit (111) by a NH₃ stripper offgas heat exchanging system (130) comprising a heat exchanging device (116, wherein the NH₃ stripper offgas heat exchanging system (130) further comprises a heat pump device (114) arranged before the heat exchanging device (116), wherein said heat pump device (114) acts to increase the pressure of the NH₃ stripper offgas stream (113) and provides an offgas stream (115), which is forwarded to the heat exchanging device (116).

Another object of the present invention is to provide a chilled ammonia process system (100) comprising
a NH₃ stripper unit (110), producing an NH₃ stripper offgas stream (113),
a CO₂ absorption liquid regenerator unit (111) for producing a stream (112) of carbon dioxide rich gas, **characterized in that** said system (100) further includes
a NH₃ stripper offgas heat exchanging system (130), comprising a heat exchanging device (116) adapted to transfer heat energy from the NH₃ stripper offgas stream (113) to the CO₂ absorption liquid regenerator unit (111).

According to one embodiment the chilled ammonia process system (100) further comprisines a flue gas heat exchanging system (131), comprising
a first heat exchanging device (126) adapted to transfer heat energy from a hot flue gas stream (125) to the CO₂ absorption liquid regenerator unit (111), wherein a flue gas stream (127) with reduced heat energy exit said first heat exchanging device (126), and
optionally, a second heat exchanging device (128) adapted to transfer heat energy from the flue gas stream (127) with reduced heat energy to the NH₃ stripper unit (110).

According to one embodiment, the NH₃ stripper offgas heat exchanging system (130) further comprises a heat pump device (114), included in the NH₃ stripper offgas heat exchanging system (130) before the heat exchanging device (116), and the heat pump device (114) being adapted to increase the pressure of the NH₃ stripper offgas stream (113) to provide an offgas stream (115) to be heat exchanged in the heat exchanging device (116).

According to one embodiment, the system further comprises the heat exchanging device (116) being connected to and adapted to heat at least part of a feed stream (124) entering the CO₂ absorption liquid regenerator unit (111).

According to one embodiment, the system further comprises the heat exchanging device (116) being connected to and adapted to heat at least a side stream (122) from the CO₂ regenerator unit (111), and is returned to the CO₂ absorption liquid regenerator unit (111) as a heated stream (123).

According to one embodiment, the system further comprises the first heat exchanging device (126) of the flue gas heat exchanging system (131) being connected to and adapted to heat at least a circulating side stream of the CO₂ absorption liquid regenerator unit (111) or at least a sump of the CO₂ regenerator unit (111).

According to one embodiment, the system further comprises the second heat exchanging device (128) of the flue gas heat exchanging system (131) being connected to and adapted to heat at least part of a feed stream (108) entering the NH₃ stripper unit (110), a circulating side stream of the NH₃ stripper unit (110) or at least a sump of the NH₃ stripper unit (110).

Yet another object of the present invention is to provide a power plant comprising the chilled ammonia process system according to the above.

### Brief description of the drawings

Referring now to the figures, which are exemplary embodiments, and wherein the like elements are numbered alike:
Fig. 1 is a schematic view of a chilled ammonia process system according to prior art, which also is used as basis for the following figures 2 and 3 according to the present invention for better understanding.
Fig. 2 is a schematic view of parts a chilled ammonia process system, including an embodiment of heat energy transferring systems according to the present invention.
Fig. 3 is a schematic view of parts a chilled ammonia process system, including an embodiment of heat energy transferring systems according to the present invention.

### Detailed description

With the present method and system maximization of industrial waste heat utilization using high temperature process streams such as flue gas by direct heat integration into the CO₂ regeneration system and NH₃ stripper system.

Further by incorporating a heat pump to act on the gas stream produced in the NH₃ stripper unit, the stripper operating pressure may be decoupled from the requirements associated with entering the absorber system or those associated with heat integration into the feed streams or recirculated side streams of the CO₂ regeneration unit. The use of a heat pump also increases the quality of latent heat of the gas stream produced in the NH₃ stripper unit and thus offsetting the steam consumption in the CO₂ regeneration unit.

The use of the above heat transferring systems reduces or eliminates steam as a requirement for the CAP. This effect is naturally very attractive for applications where steam may not be as available, like e.g. in cement plants. Also, there is obtained a flexible method to couple the low pressure stripper system with regeneration of CAP solution in the regenerator system with the use of a heat pump.

A heat pump accepts a quantity of heat (Q) at a lower temperature (below the pinch temperature) and, by using mechanical power (W), rejects the heat at a higher temperature. The rejected heat is then the sum of the input heat and the mechanical power (Q+W). In this manner a heat pump provides a method for reducing the total heating A and cooling B requirements for the process.

In this case a heat pump is used to increase the quality of latent heat in the overhead system of the NH₃ stripper so that it can be cooled in the regenerator system. In other words, the heat pump increases the dew point of the stripper overhead system from below to above the pinch temperature, allowing cooling via a rich solution and thereby reducing regenerator reboiler duty. Since the heat pump is controlled independently of system operating pressures and liquid phase compositions, on either regenerator or stripper side, a minimum required temperature approach in the overhead system from the NH₃ stripper condenser can be maintained via heat pump speed control. The heat pump also extends the window of opportunity for waste heat integration, ensuring the stripper sump temperature is low, while providing the opportunity to further integrate heat from the stripper overhead system in the regenerator and ensuring pressure allowing the flow of the overhead vapor product to the absorber system.

The term "flue gas", as used herein, generally refers to any type of gas stream comprising CO₂. Examples of such gas streams include, but are not limited to, flue gas streams resulting from the combustion of organic materials, natural gas, syngas or other gas streams mainly containing nitrogen, oxygen, hydrogen, carbon monoxide or methane.

Generally, when absorbing components from a gas stream into an absorption liquid, an absorption unit (a gas liquid mass transfer device) is used for bringing the gas into contact with the absorption liquid. Non-limiting examples of absorption units include packed bed columns and plate columns.

The gas stream produced in the NH₃ stripper unit, which generally comprises NH₃, CO₂ and other low boiling point contaminants, is also referred to herein as the "stripper offgas stream".

In some chilled ammonia based CO₂ removal systems, the gas stream comprising NH₃, also referred to herein as the stripper offgas stream is introduced directly into the absorption unit, where ammonia and CO₂ may be absorbed in the absorption liquid.

In other chilled ammonia based CO₂ removal systems, the stripper offgas stream is introduced into the regenerator which is used for separating absorbed CO₂ from the absorption solution and recovering the absorption solution for reuse in the absorption unit.

CO₂ absorption in the CO₂ absorption unit is taking place until a suitable concentration of CO₂ has been built up in the liquid (also referred to as "CO₂ rich" absorption liquid). A portion of the absorption liquid may be withdrawn from the circulation and introduced into an absorption liquid regenerator, wherein CO₂ is removed from the liquid while NH₃ is retained by the liquid. The absorption liquid with a reduced concentration of CO₂ (also referred to herein as "CO₂ lean" absorption liquid) may then be returned to the circulation and reused in the absorption unit of the CO₂ absorption stage.

According to the present method a hot flue gas, which flue gas is flue gas present in a system before entry into the CAP, is used to transfer heat energy to the CO₂ absorption liquid regenerator unit and the ammonia stripper unit. Hot flue gas, preceding the CAP, may be used in a flue gas heat exchanging system to heat a recycled side stream of the CO₂ absorption liquid regenerator unit or used to heat the sump of the CO₂ absorption liquid regenerator unit by a first heat exchanging device, e.g. a waste heat boiler, and is then forwarded as flue gas comprising a reduced amount of heat energy. The flue gas comprising a reduced amount of heat energy leaving the CO₂ absorption liquid regenerator unit may then be forwarded to the ammonia stripper unit where it is used to transfer heat energy to the ammonia stripper unit by a second heat exchanging device, e.g. a waste heat boiler. The flue gas comprising a reduced amount of heat energy may be used to heat parts or all of the feed streams into the ammonia stripper unit, or to heat a recycled side stream of the ammonia stripper unit or used to heat the sump of the ammonia stripper unit, and may thereafter be forwarded for further use. The obtained flue gas comprising a further reduced amount of heat energy may then be e.g. forwarded to the CO₂ absorption unit of the CAP as an ingoing stream. By using such a flue gas stream additional heating by steam in units 110 and 111 may no longer be necessary.

According to the present method the NH₃ stripper offgas stream formed in the CAP, may be used to heat the CO₂ absorption liquid regenerator unit in a NH₃ stripper offgas heat exchanging system. To increase the efficiency of the heat energy transfer of the NH₃ stripper offgas heat exchanging system a heat pump may be used. The heat pump device acts to increase the pressure of the NH₃ stripper offgas stream slightly which increases the condensation temperature of the stream. This result in increased quality of heat that may be recovered and improves integration flexibility of a heat exchanging device connected to the CO₂ absorption liquid regenerator unit. The heat pump increases the heat energy of the NH₃ stripper offgas, which then is heat exchanged with the CO₂ absorption liquid regenerator unit using a heat exchanging unit, e.g. a waste heat boiler. The NH₃ stripper offgas comprising an increased amount of heat energy may be used to heat parts or all of the feed streams into the CO₂ absorption liquid regenerator unit, or to heat a recycled side stream of the CO₂ absorption liquid regenerator unit, and may thereafter be forwarded for further use.

The heat exchanging systems disclosed provides an opportunity to decrease the demand for steam in the NH₃ stripper unit and the CO₂ absorption liquid regenerator unit, instead the heating may partly be provided by high or low grade heat ("waste heat").

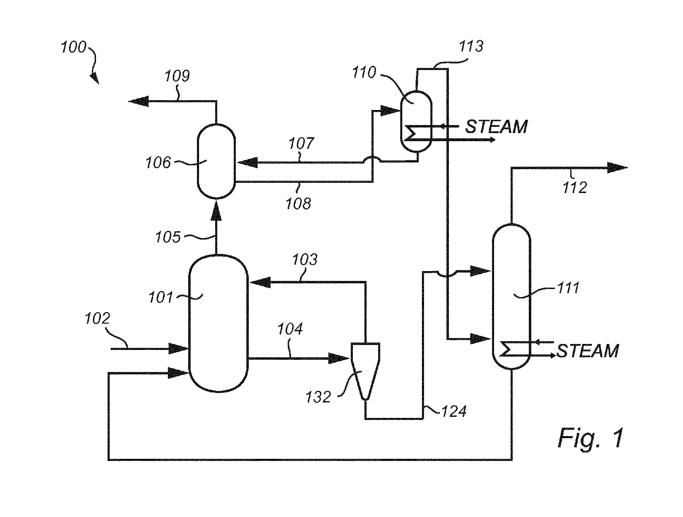

Specific embodiments of ammonia based CO₂ removal systems and heat transfer processes and the systems involved are described in detail herein below with reference to Fig. 1-3. It is to be noted that not all streams or controlling means needed to operate the process are disclosed in the figures. The Figure 1 is focusing on the main flows of the chilled ammonia process, which is absorption of CO₂, regeneration of absorption fluid, washing of flue gas from absorber and NH₃ stripping of wash liquid.

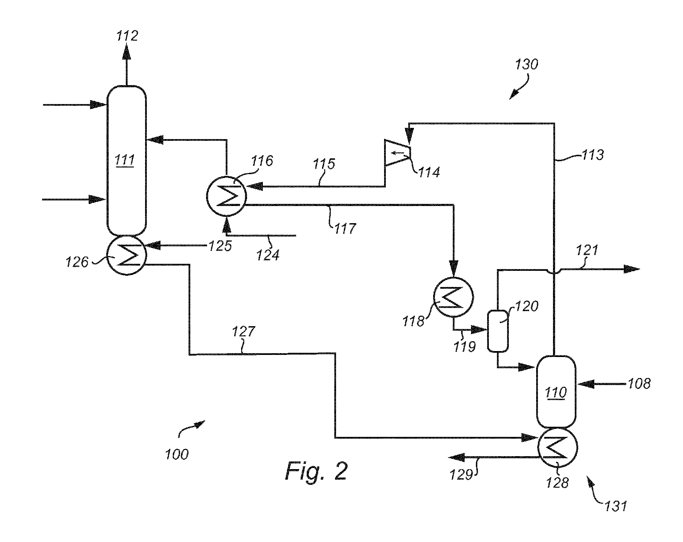

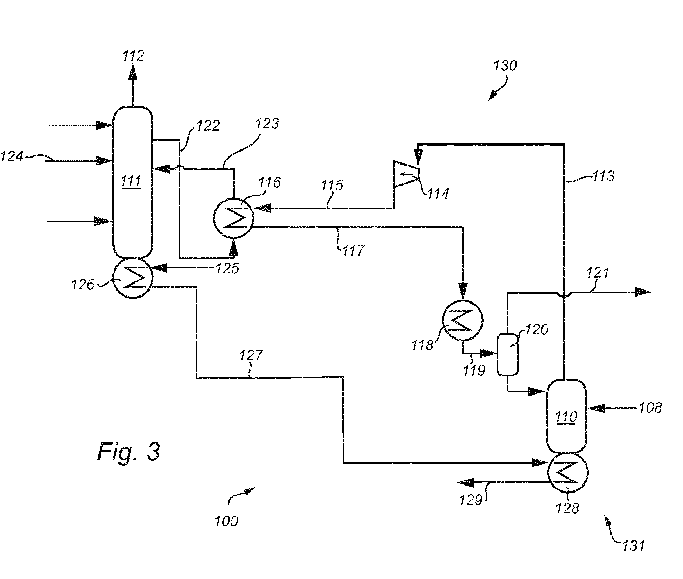

Fig. 1 is a schematic representation of a conventional chilled ammonia based CO₂ removal system. However, the process and system disclosed in Fig 1 are used as parts of the following Figs 2 and 3. The system comprises a CO₂ absorption stage comprising a CO₂ absorption unit 101 arranged to allow contact between a CO₂ containing gas stream to be depleted in CO₂ and an absorption liquid comprising ammonia. Flue gas from which CO₂ is to be removed, is fed to the CO₂ absorption unit 101 by a stream 102. In the CO₂ absorption unit 101 the flue gas is contacted with an absorption liquid comprising ammonia, e.g. by bubbling the flue gas through said absorption liquid or by spraying the absorption liquid into the flue gas. The absorption liquid comprising ammonia is fed to the CO₂ absorption unit by a stream 103. In the CO₂ absorption unit 101, CO₂ from the flue gas is absorbed in the absorption liquid, e.g. by formation of carbonate or bicarbonate of ammonium either in dissolved or solid form. CO₂ rich absorption liquid, i.e. absorption liquid containing absorbed CO₂, leaves the CO₂ absorption unit 101 via a stream 104 and is brought to an absorption liquid regenerator unit 111, also referred to as CO₂ regenerator unit, where CO₂ is separated from the absorption liquid. In some embodiments, the CO₂ absorption stage may include a hydrocyclone unit 132 for increasing the CO₂ concentration of the CO₂ rich absorption liquid which is to be transported to the regenerator unit 111. The separated CO₂ leaves the regenerator unit 111 via a stream 112 and the regenerated absorption liquid is recycled to the CO₂ absorption unit 101. Flue gas depleted in CO₂ leaves the CO₂ absorption unit 101 as a stream 105.

The ammonia based CO₂ removal system further comprises a NH₃ absorption stage for removing ammonia present in the flue gas after processing in the CO₂ absorption stage. The NH₃ absorption stage comprises a gas liquid mass transfer device, i.e. a washing unit 106. The washing unit 106 is arranged to allow contact between the flue gas depleted in CO₂ which leaves the CO₂ absorption unit 101 and a second absorption liquid which contains no ammonia or a low concentration of ammonia. The second absorption liquid is fed to the washing unit 106 of the NH₃ absorption stage via a stream 107. In the washing unit 106, contaminants, including NH₃, remaining in the flue gas when it leaves the CO₂ absorption unit 101 is absorbed in the second absorption liquid. Used absorption liquid containing absorbed contaminants leaves the washing unit 106 via a stream 108. Flue gas depleted of CO₂, NH₃ and other contaminants leaves the NH₃ washing unit 106 via a stream 109. The second absorption liquid enriched with NH₃, CO₂ and other contaminants may be recycled via an absorption liquid regenerator unit, e.g. a NH₃ stripper unit 110, wherein NH₃, CO₂ and other contaminants can be separated from the second absorption liquid. The absorption liquid regenerator unit may at stated above generally be a stripper, in which the absorption liquid is heated at a temperature at which lower boiling point components may be transferred to the gas phase to form a NH₃ stripper offgas stream 113, while higher boiling point components remain in the liquid phase and may be recycled for use as absorption liquid.

The stripper indicated in Figure 1 is a high pressure stripper where the stripper offgas stream 113, generally comprising H₂O, NH₃, CO₂ and other low boiling point contaminants, exiting the stripper unit 110, and then being fed to the CO₂ absorption liquid regenerator unit 111 of the CO₂ absorption stage. Since the CO₂ absorption liquid regenerator unit 111 is generally operated at high pressures, such as 20 bar or higher, the NH₃ stripper unit 110 must also be operated at high pressure.

The stripper may also be implemented as a low pressure stripper where the stripper offgas 113 is partially condensed with a portion of the liquid being refluxed to the stripper and the rest (not shown) forwarded to the CO₂ absorption unit 101.

The operating pressure of the stripper is generally kept as low as possible to maximize utilization of waste heat.

In the embodiments according to Fig 2 and 3 the low pressure stripper offgas stream 113 is further processed prior to partial condensation.

Fig. 2 is a schematic representation of parts a chilled ammonia process system, including an embodiment with heat energy transferring systems. Here the system and process disclosed in Fig 1 is adapted with heat energy transferring systems.

The formed stripper offgas stream 113 contains heat energy which may be used in the CO₂ absorption liquid regenerator unit 111. By replacing some heat energy otherwise provided by added steam, the configuration of the total system may become different and also the total amount of energy required to the total system may be lowered. To further increase the heat efficiency a heat pump 114 may be installed to act on the stripper offgas stream 113. The heat pump 114 provides an increase of the heat energy available and an offgas stream 115 with increased pressure and heat energy may then be forwarded to the absorption liquid regenerator unit 111. The heat pump increases e.g. pressure from 2.5 to 3.6 bar before entering a heat exchanging device 116. The heat exchanging device 116 forwards heat energy of the offgas stream 115 with an increased amount of heat to the CO₂ absorption liquid regenerator unit 111. The heat exchanging device 116 condenses mainly water from the stripper offgas stream 113 and boils mainly CO₂ in a portion of the CO₂ absorption liquid regenerator unit 111. The heat exchanging device 116 may be connected to parts or all (not shown) of the feed streams into the CO₂ absorption liquid regenerator unit 111. This embodiment is preferred in case of high pressure regeneration. As an example heat exchanging device 116 may be used to heat a steam 124 going into the CO₂ absorption liquid regenerator unit 111 from the CO₂ absorption unit 101, e.g. via a hydrocyclone unit 132 for increasing the CO₂ concentration of the CO₂ rich absorption liquid. An offgas stream 117 with reduced amount of heat energy may then be forwarded to a condenser 118, e.g. a trim condenser for further reduction of the temperature of the offgas, forming a stream 119. The latter stream 119 may then be forwarded to a separation unit 120 which separates any NH₃ present from any wash liquid present. The remaining NH₃ is forwarded as a stream 121 back to the absorber system, either back to the CO₂ absorption unit 101 or the CO₂ absorption liquid regenerator unit 111 or to any steams going into said units. The heat pump device 114 acts to marginally increase the pressure of the NH₃ stripper offgas stream 113 which increases the condensation temperature of stream 115 increasing in turn the quality of heat recovered in device 120, ultimately adding integration flexibility of heat exchanging device 116.

Further a flue gas stream 125, which may be any flue gas stream before entry into a carbon capture process like the present CAP, is used to heat the CO₂ absorption liquid regenerator unit 111 and the NH₃ stripper unit 110 in a flue gas heat exchanging system 131. A flue gas stream 125 is forwarded to a first heat exchanging device 126 connected to the CO₂ absorption liquid regenerator unit 111, and is used to heat a recirculated side stream (not shown) of the CO₂ absorption liquid regenerator unit 111 or at least a sump of the CO₂ absorption liquid regenerator unit (111). Exiting the first heat exchanging device is a flue gas stream 127 with a reduced amount of heat energy. The flue gas stream 127 may then be forwarded to a second heat exchanging device 128 connected to the NH₃ stripper unit 110, and is used to heat parts or all of the feed streams (embodiments not shown) going into the NH₃ stripper unit 110, a recirculated side stream (not shown) of the NH₃ stripper unit 110 or at least a sump of the CO₂ absorption liquid regenerator unit 111. Exiting the second heat exchanging device is a flue gas stream 129 with a further reduced amount of heat energy and may thereafter be forwarded for further use. The flue gas stream 129 may be incorporated to stream 102 (not shown) going into the CO₂ absorption unit 101.

The stripper offgas stream 113 is partially condensed in the above process and at least a portion of the liquid leaving separation unit 120 is recycled to the stripper system, with the remainder (not shown) being used to feed the absorber system. The uncondensed material leaving separation unit 120 is also fed to the absorber system as indicated by stream 121.

Fig. 3 is a schematic representation of parts a chilled ammonia process system, including an embodiment with heat energy transferring systems. Here the system and process disclosed in Fig 1 is adapted with heat energy transferring systems. The figure corresponds with Fig 2 in all aspects but one. The heat exchanging device 116 of NH₃ stripper offgas heat exchanging system 130 is connected to a recirculated side stream 122 of the CO₂ absorption liquid regenerator unit 111, which is forwarded back as a heated stream 123. This embodiment is preferred in case of low pressure regeneration.

The present method and system reduces the mass flow of steam to the regenerator unit. It allows direct utilization of low temperature waste heat to boil directly e.g. stripper sump, and high temperature waste heat to boil e.g. the regenerator sump, which was not possible amine based technologies due to thermal degradation. Provided is a flexible solution to maximize waste heat utilization and still couple the stripper overhead system with the regenerator system.

It will be appreciated that numerous variants of the embodiments described above are possible within the scope of the appended claims.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A method of operating a chilled ammonia process system (100) comprising the steps of:
transferring heat energy of a NH₃ stripper offgas stream (113) from a NH₃ stripper unit (110) to a CO₂ absorption liquid regenerator unit (111) by a NH₃ stripper offgas heat exchanging system (130) comprising a heat exchanging device (116),

2. The method of operating a chilled ammonia process system (100) according to claim 1, further comprising the steps of
transferring heat energy of a hot flue gas stream (125) to the CO₂ absorption liquid regenerator unit (111) by a flue gas heat exchanging system (131) comprising a first heat exchanging device (126), thereby obtaining a flue gas stream (127) with reduced heat energy exiting said first heat exchanging device (126), and
optionally transferring heat energy of the flue gas stream (127) with reduced heat energy to the NH₃ stripper unit (110), by the flue gas heat exchanging system (131) which further comprises a second heat exchanging device (128).

3. The method of operating a chilled ammonia process system (100) according to claim 1 or 2, wherein the NH₃ stripper offgas heat exchanging system (130) further comprises a heat pump device (114) arranged before the heat exchanging device (116), wherein said heat pump device (114) acts to increase the pressure of the NH₃ stripper offgas stream (113) and provides an offgas stream (115), which is forwarded to the heat exchanging device (116).

4. The method of operating a chilled ammonia process system (100) according to any one of claims 1-3, wherein the heat exchanging device (116) is transferring heat energy to at least part of a feed stream (124) entering the CO₂ absorption liquid regenerator unit (111).

5. The method of operating a chilled ammonia process system (100) according to any one of claims 1-4, wherein the heat exchanging device (116) is transferring heat energy to at least a side stream (122) from the CO₂ absorption liquid regenerator unit (111), which is returned to the CO₂ absorption liquid regenerator unit (111) as a heated stream (123).

6. The method of operating a chilled ammonia process system (100) according to any one of claims 2-5, wherein the first heat exchanging device (126) of the flue gas heat exchanging system (131) is transferring heat energy to at least a circulating side stream of the CO₂ absorption liquid regenerator unit (111) or at least a sump of the CO₂ absorption liquid regenerator unit (111).

7. The method of operating a chilled ammonia process system (100) according to any one of claims 2-6, wherein the second heat exchanging device (128) of the flue gas heat exchanging system (131) is transferring heat energy to at least part of a feed stream (108) entering the NH₃ stripper unit (110), a circulating side stream of the NH₃ stripper unit (110) or at least a sump of the NH₃ stripper unit (110).

8. A chilled ammonia process system (100) comprising a NH₃ stripper unit (110), producing an NH₃ stripper offgas stream (113),
a CO₂ absorption liquid regenerator unit (111) for producing a stream (112) of carbon dioxide rich gas, **characterized in that** said system (100) further includes
a NH₃ stripper offgas heat exchanging system (130), comprising a heat exchanging device (116) adapted to transfer heat energy from the NH₃ stripper offgas stream (113) to the CO₂ absorption liquid regenerator unit (111).

9. The chilled ammonia process system (100) according to claim 8, further comprising a flue gas heat exchanging system (131), comprising
a first heat exchanging device (126) adapted to transfer heat energy from a hot flue gas stream (125) to the CO₂ absorption liquid regenerator unit (111), wherein a flue gas stream (127) with reduced heat energy exit said first heat exchanging device (126), and
optionally a second heat exchanging device (128) adapted to transfer heat energy from the flue gas stream (127) with reduced heat energy to the NH₃ stripper unit (110).

10. The chilled ammonia process system (100) according to claim 8 or 9, wherein the NH₃ stripper offgas heat exchanging system (130) further comprises a heat pump device (114), included in the NH₃ stripper offgas heat exchanging system (130) before the heat exchanging device (116), and the heat pump device (114) being adapted to increase the pressure of the NH₃ stripper offgas stream (113) to provide an offgas stream (115) to be heat exchanged in the heat exchanging device (116).

11. The chilled ammonia process system (100) according to any one of claims 8-10, wherein the heat exchanging device (116) is connected to and adapted to heat at least part of a feed stream (124) entering the CO₂ absorption liquid regenerator unit (111).

12. The chilled ammonia process system (100) according to any one of claims 8-11, wherein the heat exchanging device (116) is connected to and adapted to heat at least a side stream (122) from the CO₂ absorption liquid regenerator unit (111), and is returned to the absorption liquid regenerator unit (111) as a heated stream (123).

13. The chilled ammonia process system (100) according to any one of claims 8-12, wherein the first heat exchanging device (126) of the flue gas heat exchanging system (131) is connected to and adapted to heat at least a circulating side stream of the CO₂ absorption liquid regenerator unit (111) or at least a sump of the CO₂ absorption liquid regenerator unit (111).

14. The chilled ammonia process system (100) according to any one of claims 8-13, wherein the second heat exchanging device (128) of the flue gas heat exchanging system (131) is connected to and adapted to heat at least part of a feed stream (108) entering the NH₃ stripper unit (110), a circulating side stream of the NH₃ stripper unit (110) or at least a sump of the NH₃ stripper unit (110).

15. A power plant comprising the chilled ammonia process system according to any one of claims 8-14.
